(19) Europäisches Patentamt
European Patent Office
Office européen des brevets

(11) Publication number: **0 206 339**
**A2**

(12) # EUROPEAN PATENT APPLICATION

(21) Application number: 86108721.1

(22) Date of filing: 26.06.86

(51) Int. Cl.[4]: H 01 M 6/18

(30) Priority: 28.06.85 US 749774

(43) Date of publication of application: 30.12.86 Bulletin 86/52

(84) Designated Contracting States: BE CH DE FR LI

(71) Applicant: UNION CARBIDE CORPORATION, 39 Old Ridgebury Road, Danbury Connecticut 06817 (US)

(72) Inventor: Akridge, James Robert, 7349 Greenleaf Avenue, Parma, OH 44130 (US)

(74) Representative: Görtz, Dr. Fuchs, Dr. Luderschmidt Patentanwälte, Sonnenberger Strasse 100 Postfach 26 26, D-6200 Wiesbaden (DE)

(54) **Vitreous solid lithium cation conductive electrolyte.**

(57) A solid state electrolyte for a solid state cell system with a ternary vitreous lithium cation conductor comprising besides $Li_2S$ and $P_sS_5$ or $SiS_2$ an oxygen containing lithium compound such as $Li_2CO_3$, $Li_2O$, LiOH or $Li_2SiO_3$, and having a conductivity of at least $0.75 \times 10^{-4}$ $ohm^{-1}$ $cm^{-1}$ at 25 °C.

EP 0 206 339 A2

# VITREOUS SOLID LITHIUM CATION CONDUCTIVE ELECTROLYTE

## Description of the Invention

### Technical Field

The invention relates to a ternary solid state electrolyte based on a vitreous lithium cation conductor.

### Background of the Art

Ionic conductivity is usually associated with the flow of ions through a liquid solution of salts. In the vast majority of practical uses of ionic conductors, i.e., as electrolytes for dry cell batteries, the liquid solution is immobilized in the form of a paste or gelled matrix or is absorbed in a separator to overcome the difficulties associated with handling and packaging a liquid. However, even after immobilization, the system is still subject to possible leakage, has a limited shelf life due to drying out or crystallization of the salts and is suitable for use only within a limited temperature

range corresponding to the liquid range of the electrolyte. In addition, the use of a large volume of immobilizing material has hindered the aims of miniaturization.

In addition, improved microelectronic circuit designs have generally decreased the current requirements for electronic devices. This in turn has enhanced the applicability of solid electrolyte power sources which usually can deliver currents only in the microampere range. These solid electrolyte systems have the inherent advantages of being free of electrolyte leakage and internal gassing problems due to the absence of a liquid phase. In addition, they also have a much longer shelf life than the conventional liquid electrolyte power sources.

In attempting to avoid the shortcomings of liquid systems, investigators have surveyed a large number of solid compounds seeking to find compounds which are solid at room temperature and have specific conductances approaching those exhibited by the commonly used liquid systems. Solid electrolytes must be essentially electronic insulators so as not to internally short the cell while at the same time they must allow ionic migration in the crystal lattice for the cell to operate. It has been discovered that certain metallic salts which are solids at room temperature have specific conductances sufficiently high to permit their use in practical battery applications. For example, US-A-3,723,185 discloses solid state electrolytes of compounds conforming to the

general formula AgI-MCN-AgCN or modifications thereof where M is potassium, rubidium, cesium or mixtures thereof.

US-A- 4,331,750 discloses a cation conductive vitreous composition suitable for use as a solid electrolyte and having the general formula:

$$aP_2S_5 . bLi_2S . cLiX$$

where:

X represents chlorine, bromine or iodine:

c is greater than or equal to 0;

the ratio b/(a+b) lies between 0.61 and 0.70; and

the ratio c/(a+b+c) is less than or equal to a limit which corresponds to solubility in the vitreous phase of LiX in the composition $aP_2S_5 . bLi_2S$.

US-A-4,465,746 discloses a solid state electrolyte based on vitreous lithium cation conductor of the composition:

$$SiS_2 . xLi_2S . yLiI$$

where:

x is from 0.8 to 1.5,

y is from 0 to about 2, and

wherein said composition has a conductivity of at least $0.75 \times 10^{-4} ohm^{-1} cm^{-1}$ at 25°C.

US-A-4,513,070 discloses an electrochemical device which uses a vitreous material having a general formula

$$xA_aR_b-yN_mR_c-zN_nY_p$$

wherein A is Si, Ge, P, S, B, Nb, As, V, Cr or Mo; R is O, S or Se; N is Li, Na, K or Ag and Y is I, Br, Cl, F, $ClO_4$, $CF_3SO_3$, SCN or $SO_4$ with the

proviso that the material contain at least two salts $N_nY_p$ and wherein a, b; m, c and n, p represent the indices corresponding to the stoichiometry of the constituents in a given group and x, y and z, whose sum is equal to 1, represent the indices corresponding to the overall molar fractions respectively of the compound or compounds forming the former system, the modifier system and the doping salt of the material, the values of these indices being compatible with the vitreous range of a given material.

It is an object of the present invention to provide a new class of vitreous compositions that can be used as solid electrolytes in solid state cell systems.

Another object of the invention is to provide a $SiS_2$-based or $P_2S_5$-based vitreous lithium cation conductor which contains a lithium oxide compound and which has a conductivity of at least $0.75 \times 10^{-4} ohm^{-1} cm^{-1}$ at 25°C.

The foregoing and additional objects will become more fully apparent from the following description.

Disclosure of the Invention

The invention relates to a ternary solid electrolyte having a vitreous lithium cation conductor of the composition:

$$aX, bLi_2S, Y$$

where

X is selected from the group consisting of $P_2S_5$ and $SiS_2$;

a is from about 0.5 to about 2;

b is from 0.25 to 2;

Y is an oxygen-containing lithium compound such as at least one lithium compound selected from the group consisting of $Li_2CO_3$, $Li_2O$, LiOH, $Li_2SiO_3$, $Li_2SO_4$, and $Li_4SiO_4$; and wherein said composition has a conductivity of at least $0.75 \times 10^{-4} ohm^{-1} cm^{-1}$ at 25°C.

In the above composition b is preferably between about 1 and about 2. As used herein, vitreous shall mean a composition in a glassy (non-crystalline) state and shall also include materials that have been cooled so rapidly from the molten condition that crystal formation is prevented.

When X is $SiS_2$, then the vitreous composition of $SiS_2$ and $Li_2S$ or $Li_2SiS_3$ can be prepared at 1 atmosphere pressure by first mixing silicon disulfide ($SiS_2$) and lithium sulfide ($Li_2S$) in 1:1 mole ratio in an inert gas filled dry box. The mixture is then placed in a vitreous carbon crucible which in turn is placed in a inert gas reaction chamber. The $SiS_2$ and $Li_2S$ mixture is heated at an elevated temperature for a time period sufficient for the $SiS_2$ to react with the $Li_2S$ to form $Li_2SiS_3$. Generally, the $SiS_2$ and $Li_2S$ mixture can be heated at about 950°C for about 6 hours. The $Li_2SiS_3$ is then quenched to ambient temperature (about 20°C) to form the vitreous solid. If desired, the lithium compound can be added by grinding together the vitreous $Li_2SiS_3$ and the lithium compound, placing the mixture in a vitreous carbon crucible and then heating the mixture at an elevated temperature for a

time period sufficient to form a solution of the lithium compound in the $Li_2SiS_3$ material. The material is then quenched to room temperature. Generally the mixture can be heated at about 950°C for about 6 hours and then quenched to room temperature.

Using the above technique, $Li_2S$ and $SiS_2$ can be fused with $Li_2CO_3$, $Li_2SiO_3$, LiOH or $Li_2O$ to produce vitreous compositions all having conductivity in excess of $10^{-4}ohm^{-1}cm^{-1}$. The addition of $Li_2CO_3$ to $Li_2SiS_3$ and then fusing the materials resulted in a red-brown glass with excellent conductivity. Additionally, $Li_2CO_3$ assists in formation of a vitreous product since fusion of $Li_2S + SiS_2$ at 950°C followed by a cold water quench to 20°C often results in a crystalline and/or opaque material, whereas fusion and quenching of material containing $Li_2CO_3$ results in a clear reddish-brown glass. Indeed, even slow cooling the fused materials containing $Li_2CO_3$ results in a clear reddish-brown glass. Thus lithium carbonate significantly and unexpectedly aids in forming and maintaining the vitreous state such that the need to rapidly quench the melt is lessened. Lithium metasilicate, $Li_2SiO_3$, also forms a highly cationically conductive glass with $Li_2SiS_3$.

$P_2S_5$-based vitreous compositions can be prepared by melting together the components $P_2S_5$, $Li_2S$ and the lithium compound at a temperature which lies between 700°C and 950°C, followed by tempering and then by annealing at a

temperature of about 100°C. If desired, the $P_2S_5$ and $Li_2S$ components can be first heated and then the lithium compound can be added. However, the synthesis of $P_2S_5$-based materials must be preformed in sealed vessels due to the volatility of $P_2S_5$.

The preferred lithium compounds for use in the invention are $Li_2CO_3$, $Li_2SiO_3$, LiOH and $Li_4SiO_4$. The lithium compounds $Li_2CO_3$, $Li_2SiO_3$ and $Li_4SiO_4$ are believed to be network formers and not dopants thus making them the most preferred lithium compounds. Network former is a compound which provides a macromolecular network of irregular structure whereby the anion of the network former, i.e., $O^=$, $S^=$ etc., forms bridges between the cations of the network former resulting in the formation of an extended network. Network modifier is an ionic compound added to a network former which introduces covalency into the macromolecular network by incorporating its anion into the macromolecular network by cleavage of some of the bridges between the network former cation and the associated network former anion and bonding the modifier anion to the network former cation. Network dopant is a compound added to a network former or the network former plus network modifier which provides additional mobile cations but whose assocated anion does <u>not</u> become incorporated into the macromolecular structure but rather plays a role more like a plasticizer especially in the case of halogenated salts.

Anode materials suitable for use with the solid electrolyte of this invention include lithium, silver, sodium, potassium, and rubidium. The preferred anode materials are lithium and lithium alloys.

Cathodes suitable for use with the solid electrolyte of this invention include poly(N-vinylpyrrolidone) (PVP) + iodine, PVP + iodine + $TiS_2$, $FeS_2$, $Sb_2S_3$, $TiS_2$, $MoS_3$, $TiS_2$+$MoS_3$, organic charge transfer complexes with halogens, and $MnO_2$.

Example 1

Vitreous $Li_2SiS_3$ was prepared by mixing 30 grams $SiS_2$ and 15 grams $Li_2S$ in 1:1 mole ratio in a helium-filled dry box. The mixture was placed in a vitreous carbon crucible which in turn was placed in a vitreous silica reaction tube. The tube was closed and was equipped with a conventional exhaust vent and a small conventional intake feed tube adapted for feeding helium into the reaction tube. The $SiS_2$ and $Li_2S$ mixture, under a 1 atmosphere pressure of helium, was heated at 950°C for 6 hours and then the reaction tube was quenched to room temperature (20°C) by submerging the reaction tube in cold water. The vitreous $Li_2SiS_3$ solid electrolyte produced was then ground.

Five grams of the vitreous $Li_2SiS_3$ produced was combined with 1 gram of $Li_2CO_3$. The mixture was ground, placed in a vitreous carbon crucible and then placed in a reaction tube. Under 1 atmosphere helium pressure, the $Li_2SiS_3$ and

$Li_2CO_3$ mixture was heated at 950°C for 6 hours and then the reaction tube was quenched to room temperature (20°C) by submerging the reaction tube in cold water. The vitreous $0.375Li_2CO_3 \cdot Li_2SiS_3$ solid electrolyte produced was ground, pelletized and found to have a conductivity of 1.75 x $10^{-4} ohm^{-1} cm^{-1}$ at 25°C.

Specifically the conductivity was measured by pelletizing (via the application of uniaxial pressure) the powdered material between titanium disulfide electrodes at 89 MPa in a conventional steel mold with steel rams. The disc of solid electrolyte with $TiS_2$ electrodes was ejected from the mold and then heat sealed in a polyethylene bag. The sample sealed in the bag was then placed in an alcohol-filled polytetrafluoroethylene cylinder with a tight fitting lid which was in turn placed in a large steel mold fitted with steel rams. The alcohol-filled polytetrafluoroethylene cylinder containing the sample was then compressed to 373 MPa which results in an isostatic compression of the glass sample disc and its associated electrodes. The $TiS_2$/solid electrolyte/$TiS_2$ sample was placed in a spring-loaded holder fitted with gold contacts. The conductivity of the sample was measured using the complex plane technique first applied to solid electrolytes by J. E. Bauerle, J. Phys. Chem. Solids, 30,2657 (1969). The complex plane technique is at present almost universally applied for the measurement of conductivity of solid electrolytes.

## Example 2

Varying other vitreous compositions were produced as in Example 1 and the conductivity of each composition was measured. The specific compositions and the conductivity measured are shown in Table 1.

Table 1
Conductivity at 25°C

| Vitreous Composition | Conductivity $ohm^{-1}cm^{-1}$ |
|---|---|
| $Li_2SiS_3 + 0.1875Li_2CO_3$ | $2.35 \times 10^{-4}$ |
| $Li_2SiS_3 + 0.375Li_2O$ | $2 \times 10^{-4}$ |
| $Li_2SiS_3 + 0.75LiOH$ | $1.5 \times 10^{-4}$ |
| $Li_2SiS_3 + 0.375Li_2SiO_3$ | $2.1 \times 10^{-4}$ |

## Example 3

A 0.787 inch diameter by 0.063 inch high coin cell was constructed as follows. A cathode composed of $TiS_2$ containing some solid electrolyte was employed. The $TiS_2$ cathode along with a separate layer of $0.1875Li_2CO_3 \cdot Li_2SiS_3$ electrolyte as prepared in the same manner as in Example 1 and a lithium anode were isostatically compressed at 551 MPa as described in US-A-4,477,545 and then assembled into the cell housing. The cell was continuously discharged at ambient temperature across a 30 Kohm load to a 1.4 volt cutoff. The voltage readings observed with time are shown in Table 2.

Table 2

$Li/0.1875Li_2CO_3 \cdot Li_2SiS_3/TiS_2$

| Voltage (volts) | Time (hours) |
|---|---|
| 2.37 | 0 |
| 2.18 | 24 |
| 2.02 | 48 |
| 1.88 | 72 |
| 1.63 | 96 |
| 1.41 | 112 |

It should be understood that the foregoing disclosure relates to preferred embodiments of the invention and it is intended to cover all changes and modifications of the invention which do not depart from the spirit and scope of the appended claims.

CLAIMS:

1. A ternary solid state electrolyte having a vitreous lithium cation conductor of the composition:

$$aX, bLi_2S, Y$$

where

X is selected from the group consisting of $P_2S_5$ and $SiS_2$;

a is from about 0.5 to about 2;

b is from 0.25 to 2;

Y is at least one oxygen-containing lithium compound; and

wherein said composition has a conductivity of at least $0.75 \times 10^{-4} ohm^{-1} cm^{-1}$ at 25°C.

2. The solid state electrolyte of Claim 1 wherein Y is a lithium compound selected from the group consisting of $Li_2CO_3$, $Li_2O$, LiOH, $Li_2SiO_3$, $Li_2SO_4$ and $Li_4SiO_4$.

3. The solid state electrolyte of claim 1 or 2 wherein X is $SiS_2$.

4. The solid state electrolyte of claim 1 or 2 wherein X is $P_2S_5$.

5. The solid state electrolyte of claim 1 or 2 wherein the vitreous lithium cation conductor is $Li_2SiS_3 \cdot 0.1875Li_2CO_3$.

6. A solid state cell comprising an anode, a cathode and a ternary vitreous lithium cation conductor according to anyone of claims 1-5.

7. The solid state cell of claim 6 wherein the anode is selected from the group consisting of lithium, lithium alloys, sodium, potassium, rubidium, and silver.

8. The solid state cell of claim 6 wherein the cathode is selected from the group consisting of $TiS_2$, $MoS_3$, PVP + $I_2$, PVP + I + $TiS_2$, $TiS_2$ + $MoS_3$, $FeS_2$, $Sb_2S_3$, and $MnO_2$.

9. The solid state cell of claim 6 wherein the anode is lithium, and the cathode is $TiS_2$.

10. The solid state cell of claim 6 wherein the anode is lithium and the cathode is $TiS_2$ + $MoS_3$.